# EUROPÄISCHE PATENTSCHRIFT

(11) **EP 1 518 357 B1**
(45) Veröffentlichungstag und Bekanntmachung des Hinweises auf die Patenterteilung: **24.05.2006**
(21) Anmeldenummer: 03762424.4
(22) Anmeldetag: 30.06.2003
(51) Int. Cl.: H04L 12/26, H04Q 3/00, H04M 3/22

(54) **ÜBERPRÜFUNG DER ÜBERTRAGUNGSQUALITÄT IN PAKETBASIERTEN NETZEN**
TESTING OF TRANSMISSION QUALITY IN PACKET-BASED NETWORKS
CONTROLE DE LA QUALITE DE TRANSMISSION DANS DES RESEAUX A COMMUTATION PAR PAQUETS

(30) Priorität: 02.07.2002 DE 10229679
(43) Veröffentlichungstag der Anmeldung: 30.03.2005
(73) Patentinhaber: SIEMENS AKTIENGESELLSCHAFT, 80333 München (DE)
(72) Erfinder: LÖBIG, Norbert, 64291 Darmstadt (DE)
(86) Internationale Anmeldenummer: PCT/DE2003/002167
(87) Internationale Veröffentlichungsnummer: WO 2004/006504

(56) Entgegenhaltungen:
- EP-A- 0 777 401
- US-A1- 2002 167 936
- SATORU OHTA ET AL: "APPLYING OSI SYSTEMS MANAGEMENT STANDARDS TO REMOTELY CONTROLLED VIRTUAL PATH TESTING IN ATM NETWORKS" IEICE TRANSACTIONS ON COMMUNICATIONS, INSTITUTE OF ELECTRONICS INFORMATION AND COMM. ENG. TOKYO, JP, Bd. E76 - B, Nr. 3, 1. März 1993 (1993-03-01), Seiten 280-290, XP000304001 ISSN: 0916-8516

## Beschreibung

Die Erfindung betrifft ein Verfahren, einen Ressourcen-Server, ein Gateway und ein System zur Überprüfung der Übertragungsqualität in einem Paketnetz.

Die Erfindung liegt auf dem Gebiet der Vermittlungstechnik und behandelt Aspekte der Qualitätsüberprüfung bei Datenübertragung über Paketnetze, wie z.B. IP (Internet Protocol) basierte Netze.

TMD (time division multiplexing) Netze, auch zeitmultiplexbasierte Kommunikationsnetze genannt, stellen eine Vielzahl von Qualitätsmerkmalen zur Verfügung, vor allem für Dienste mit Sprachübertragung, d.h. Telephonie. Die Garantie dieser Merkmale erforderte regelmäßige Überprüfung bzw. Überwachung von Übertragungsstecken. Im Hinblick auf die Konvergenz von TDM Netzen und paketbasierten Netzen ist wünschenswert, die aus TDM Netzen bekannten Qualitätsmerkmale auch bei Paketnetzen und bei dem Interworking verschiedener Netztypen zu gewährleisten. Vor allem bei sprachbezogenen Diensten spielt die Einhaltung von Qualitätsmerkmalen eine wichtige Rolle, um Erfordernissen wie Echtzeitübertragung und hinreichende Sprachqualität zu genügen. So richten sich z.B. beträchtliche Entwicklungstätigkeiten auf die Bereitstellung von Qualitätsmerkmalen bei Sprachübertragung über IP Netze. Man spricht in diesem Zusammenhang von Voice over IP, abgekürzt VoIP.

Voraussetzung für eine Daten- oder Sprachübertragung über ein paketbasiertes Netz mit Qualitätsmerkmalen, die denen von TDM Netzen vergleichbar sind, ist der Einsatz von Prüfmittel und Prüfverfahren zur Kontrolle der Übertragungsqualität.

Bei herkömmlichen zeitmultiplexbasierte Kommunikationsnetzen (TDM Netzen), die mit hoher Betriebsgüte funktionieren sollen, sind Verfahren der Verbindungsleitungswartung und -überprüfung verfügbar, die von den im Netz befindlichen Vermittlungsstellen zur Verfügung gestellt werden können bzw. von diesen unterstützt werden. Diese Verfahren dienen der Fehlererkennung, Fehlerdiagnose und Fehlerlokalisierung. Sie beruhen zum großen Teil entweder auf Eigenüberwachungsmechanismen der Vermittlungsstelle ( z. B. Unregelmäßigkeiten der Signalisierung, Daueranreize, dauerhaft gesperrte, belegte, unbelegte Leitungen, Durchgangsprüfung gemäß dem Standard ITU-T Q.724, Telephone user part signalling procedures, für #7 (Zeichengabesystem Nummer 7) signalisierte Leitungen im Rahmen des Verbindungsaufbaus, PCM (Pulse Code Modulation) Fehlererkennung) oder auf über Bedieneinrichtungen für Netz bzw. Vermittlungsstelle gestarteten Prüfaufträgen zur routinemäßigen Prüfung. Routinemäßige Prüfungen können gemäß einem vordefinierten Prüfplan bzw. Zeitplan oder zur Prüfung auf Bedarf mit manueller oder automatischer Aktivierung für eine gewisse Anzahl von Verbindungsleitungen einer Vermittlungsstelle vorgenommen werden. Hierbei sind die gewünschten Prüfungen im Prüfauftrag spezifiziert, und die Prüfergebnisse werden in einem Testbericht des Vermittlungssystems an der Bedienerschnittstelle zur Verfügung gestellt.

Typischerweise werden in den an der Verbindungsleitungsprüfung beteiligten Vermittlungssystemen Spezialeinrichtungen bereitgehalten, die als Initiator einer Prüfung - in der Fachsprache häufig Direktor genannt - in einer ersten Vermittlungsstelle und als Empfangs- bzw. Antworteinrichtung - häufig Responder genannt - in einer zweiten Vermittlungsstelle vorgesehen sind.

Mit dem Aufbau einer Verbindung über die zu prüfende Verbindungsleitung, die Direktor und Responder verbindet, kann dann eine im allgemeinen mit dem Austausch von Signalisierung verbundene Prüfsequenz zwischen Direktor und Responder zum Ablauf gebracht werden. Durch Spiegelung der Information in der zweiten bzw. fernen Vermittlungsstelle kann die Direktor- und Responderfunktion auch für eine Verbindungsleitungsprüfung in der ersten bzw. initiierenden Vermittlungsstelle liegen. Die Leitungsprüfung beruht im Falle von TDM-Netzen im Regelfall auf.dem Senden von Tönen sowie der Messung von Leistungs- und Störpegel sowie von Quantisierungsverzerrungen, d.h. Verzerrungen durch das Abtasten von Signalen im Zuge einer Puls-Code-Modulation. Im Falle digitaler Leitungen können ebenfalls Prüfmuster übertragen werden. Über spezielle Arbeitsplätze zur Verbindungsleitungsprüfung kann das Vermittlungssystem zusätzlich manuellen Zugriff auf die zu prüfende Verbindungsleitung, die Möglichkeit der Steuerung von Prüfungen und Messungen und die Option des Mithörens der übertragenen Sprachdaten auf der zur prüfenden Leitung durch das Bedienpersonal gewähren.

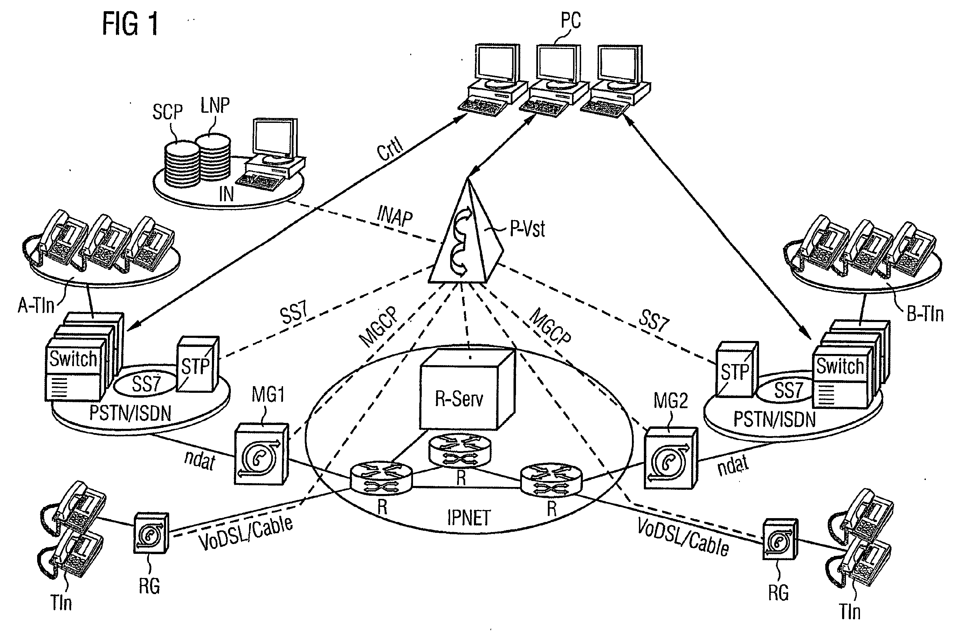

Für die Bereitstellung von entsprechenden oder ähnlichen Prüf- und Überwachungsfunktionen wie bei TDM Netzen für paketbasierte Netze müssen die unterschiedliche Architektur paketbasierter Netze und die vermittlungstechnischen Unterschiede berücksichtigt werden. Ein typisches Szenario für Sprachübertragung über paketbasierte Netze ist in der Figur 1 angegeben.

Das Szenario von Figur 1 zeigt, wie an ein TDM Netz PSTN/ISDN angeschlossene Teilnehmer Sprachdaten über ein paketbasiertes Netz IPNET austauschen können und welche Anpassungen dazu erforderlich sind. Bei dem TDM Netz handelt es sich beispielsweise um ein PSTN (public switched telephone network) Netz, an das Teilnehmer A-Tln und B-Tln, z.B. über einen ISDN (integrated services digital network) Anschluss, angeschlossen sind. Teilnehmer Tln können außer mit Hilfe der klassischen analogen und ISDN-Endgeräte und Nebenstellen auch mit Hilfe für das Paketnetz IPNET geeigneten Terminals über das Paketnetz IPNET Sprachdaten austauschen. Diese Terminals erlauben häufig breitbandigen Datenzugriff auf das paketbasierte Netz und unterstützen zusätzlich die von öffentlichen Fernsprechnetzen bekannten Basisleistungsmerkmale mit Hilfe von Protokollen wie H.323 und SIP (session initiation protocol)insbesondere für die Übertragung von Sprache über Paketnetze. Als Zugangsmedien zum Teilnehmer Tln bieten sich im Hinblick auf breitbandigen Zugriff mit geeigneten xDSL-Techniken (DSL: digital subscriber line) betriebene Teilnehmeranschlußleitungen an, wie auch die weit verbreiteten Kabelnetze. Dieser Sachverhalt ist durch das Bezugszeichen VoDSL/Cable zum Ausdruck gebracht, durch das die Alternativen der Benutzung von Sprachübertragung über eine xDSL Verbindung (VoDSL: Voice over DSL) und Kabelzugang (Voice over Cable) im Zugangsbereich andeutet werden. Paketnetzseitig werden die Zugangsnetze VoDSL/Cable in der Regel durch Anpassungseinrichtungen terminiert (in der Figur nicht dargestellt). Mit Hilfe dieser Zugangsnetze VoDSL/Cable können breitbandige Endeinrichtungen (PC mit Internetzugriff, Fernsehgerät, Videotelephon) wie auch klassische Teilnehmerendgeräte, d.h. analoge Telephone, ISDN-Telephone, sowie analoge und ISDN-Nebenstellen angeschlossen werden. Für den Anschluss von Endeinrichtungen/Endgeräten sind in Figur 1 teilnehmernahe Zugangseinrichtungen RG (RG: für residential gateway), die auch als residental gateways oder customer premises gateways bezeichnet werden. Beispiele für derartige Zugangseinrichtungen sind z.B. Integrated Access Devices IAD oder Multimedia Terminal Adapter MTA am/im Cable Modem.

Für das Interworking der zeitmultiplexbasierten Netze PSTN/ISDN und des paketbasierten Netzes IPNET sind sowohl teilnehmernahe als auch vermittlungsknotenseitige Anpassungen erforderlich. Hat eine TDM-basierte Vermittlungsstelle die Verbindungssteuerung und die Terminierung und Durchschaltung der Nutzkanäle zur Aufgabe, so verbleibt der paketbezogenen Vermittlungsstelle P-Vst die Aufgabe der Verbindungssteuerung ergänzt um die Aufgabe der Steuerung der zugehörigen, außerhalb der Vermittlungsstelle P-Vst geführten Nutzkanäle bzw. Nutzdaten ndat über externe Einrichtungen (z.B. Gateways, Ressourcen-Server,...), welche geeignete Schnittstellen für Nutzdatenströme (z.B. Sprachdatenübertragung mittels des RTP (real time protocol) Protokolls) und Signalisierung (z.B. mit Hilfe des MGCP (media gateway control protocols) Protokolls, des H.248 Protokolls oder des H.323 Protokolls) bereitstellen.

Zeitmultiplexbasierte Verbindungsleitungen zu einer klassischen (öffentlichen oder privaten) Vermittlungsstelle Switch werden durch ein Media Gateway MG abgeschlossen, das durch eine paketbasierte Vermittlungsstelle P-Vst gesteuert wird. Klassische Teilnehmerleitungen und Nebenstellen an einer paketbasierten Vermittlungsstelle P-Vst werden über sog. Residential Gateways RG angeschlossen. Die Signalisierung wird vorzugsweise paketbasiert an die paketbasierte Vermittlungsstelle P-Vst herangeführt. Die von der paketbasierten Vermittlungsstelle P-Vst durchzuschaltenden Nutzkanalverbindungen werden außerhalb der Vermittlungsstelle P-Vst ohne Wandlung auf Zeitmultiplextechnik geführt, so dass ein direkter Nutzdatentransfer ndat durch das paketbasierte Netz IPNET ermöglicht wird im Hinblick auf Gewährleistung einer hohen Sprachqualität. Innerhalb des Paketnetzes IPNET werden Nutzdaten mittels Router R weitergeleitet. Im Paketnetz IPNET platzierte Ressourcen-Server R-Serv können dabei zusätzliche Funktionen, z.B. IVR (interactive voice response) Funktionen bereitstellen. Signalisierungsfunktionen und Steuerungsaufgaben für das Paketnetz IPNET und die TDM Netze PSTN/ISDN werden durch die paketbasierte Vermittlungsstelle P-Vst wahrgenommen. Die paketbasierte Vermittlungsstelle P-Vst kann z.B. durch eine herkömmliche Vermittlungsstelle mit zusätzlichen Modulen für die Vermittlung von Paketverkehr realisiert werden. Die Signalisierung für TDM Netze wird mittels des SS7 (signaling system 7) Protokolls durchgeführt. Über einen Signalling Transfer Point STP können SS7 Signalisierungsnachrichten von dem TDM Netz PSTN/ISDN zu der paketbasierten Vermittlungsstelle P-Vst und umgekehrt übertragen werden. Die Signalisierung zwischen der paketorientierten Vermittlungsstelle P-Vst und verschiedenen Gateways, z.B. Media Gateways MG, Residential Gateways RG, wird mittels des MGCP (Media Gateway Control Protocol) Protokolls durchgeführt. Mit Hilfe von Terminals PC können Bedienereingaben Crtl gemacht und Kontrolldaten abgefragt werden. Kontrollfunktionen und Einstellungen für die Paketvermittlungsstelle P-Vst können im Rahmen des Intelligent Network IN Konzepts erfolgen. Dabei sind ein SCP (service control point) und LNP (local number portability) Funktionalität vorgesehen, wobei mittels des INAP (IN application part) Protokolls mit der paketbasierten Vermittlungsstelle P-Vst kommuniziert wird.

Angesichts derartiger Szenarien von z.B. im Rahmen von Sprachübertragung über ein paketorientiertes Netz geleiteten Verbindungen müssen Funktionen der Verbindungsleitungsprüfung für paketbasierte Übertragungsabschnitte bereitgestellt werden.

Um funktionskompatibel zu den TDM-Netzen zu sein, müssen die paketbasierten Vermittlungsstellen P-Vst die für ihre TDM-Leitungen geforderten mitlaufenden oder auf Bedarf notwendigen Leitungsprüfungen unterstützen. Die Verbindungswege im Paketnetz IPNET werden durch die Prüfmittel der TDM-Netze nicht erfasst. Die durch sie mitbestimmte Sprachqualität kann prinzipiell mit den im TDM-Bereich verfügbaren tonbasierten Verfahren nur im Spezialfall tontransparenter Kodierungsverfahren (z.B. entsprechend der Standards ITU-T G.711, Pulse code modulation (PCM) of voice frequencies, und ITU-T G.728, Coding of speech at 16 kbit/s using low-delay code excited linear prediction) bestimmt werden, was jedoch eine nicht praktikable Einschränkung für Paketnetze bedeuten würde. Außerdem zeigt es sich, dass Sprache gegen die typischerweise im Paketnetz auftretenden Verfälschungen wie Paketverlust und Verzögerungen im Vergleich zur reinen Tonübertragung relativ unempfindlich ist, so dass die Bestimmung der Übertragungsqualität mit tonbasierten Techniken in Paketnetzen nicht sinnvoll erscheint. Hierfür stehen andere, allerdings auch kompliziertere Verfahren zur Verfügung (s. ITU-T: P.861 (Perceptual Speech Quality Measurement, P.862 (Perceptual Evaluation of Speech Quality).

Es existieren PC-basierte Verfahren, bei denen eine Mehrzahl von externen PCs über Gateways auf das Paketnetz zu Prüfzwecken zugreifen. Damit können dann Verbindungen über das Paketnetz hinsichtlich der Sprachqualität geprüft und bewertet werden. Ein Beispiel für ein derartiges Verfahren ist das ROTL (remote office test line) System. Nachteilig sind die in einem mit vielen Gateways ausgebauten öffentlichen Netz entstehenden hohen Kosten dieser Einrichtungen, die Notwendigkeit peripher bereitzuhaltender PC-basierter Einrichtungen und der mit dem Anschluss derselben einhergehende Verlust an Übertragungskapazität.

Aus der EP-A-0777401 ist ein auf Rückspiegelung einer Testnachricht basierendes Verfahren für einen Test einer ATM Übertragungsstrecke bekannt. Dabei wird eine Testnachricht von einem Ausgangsendpunkt zu einem Zielendpunkt übertragen, bei dem Zielendpunkt als Testnachricht identifiziert und anschließend zum Ausgangsendpunkt zurück übertragen.

Die Erfindung hat zur Aufgabe, ein effizientes Testen von Paketnetzabschnitten zu ermöglichen unter Vermeidung von Nachteilen herkömmlicher Verfahren.

Die Aufgabe wird durch ein Verfahren nach Anspruch 1, einen Ressourcen-Server nach Anspruch 11, ein Gateway nach Anspruch 14 und ein System nach Anspruch 18 gelöst.

Das erfindungsgemäße System umfasst ein paketbasiertes Vermittlungssystem, einen Ressourcenserver und ein oder mehrere Gateways. Der Ressourcenserver ist mit einer Direktor- und Responderfunktionalität versehen, wodurch von dem Ressourcenserver Prüfsignale bzw. Prüfsequenzen ausgesendet (Direktorfunktionalität) und wieder empfangen (Responderfunktionalität) werden können. Optional lassen sich Direktor- und Responderfunktionalität in verschiedenen Ressourcen-Servern realisieren. Das oder die Gateways umfassen eine Spiegelfunktionalität. Dabei wird als Spiegelfunktionalität die Fähigkeit zur Rückleitung des aus dem Paketnetz kommenden Nutzdatenstroms auf derselben bidirektionalen Verbindung oder die Weiterübermittlung der Nutzdaten auf einer weiteren Verbindung im Paketnetz bezeichnet. Die Erfindung erlaubt, in einem Paketnetz die Qualität der Übertragung über Verbindungsstrecken bzw. Verbindungen zu überprüfen. Anfangs- und Endpunkt einer zu überprüfenden Übertragungsstrecke bzw. Teilstrecke ist dabei z.B. durch Gateways oder durch den Ressourcenserver und ein Gateway gegeben. Die Überprüfung der Übertragungsqualität von Übertragungsstrecken erfolgt mit Hilfe der Übertragung einer Prüfinformation, z.B. eines Prüfsignals oder einer Prüfsequenz. Bei dieser Prüfinformation kann es sich z.B. auch um eine Sprach- oder Toninformation handeln. Dieser Fall kann vor allem im Hinblick auf die Übertragungsqualität von VoIP Anwendungen bedeutsam sein. Ebenso ist denkbar, dass eine kurze Videosequenz übertragen wird.

Als Endpunkt einer zu überprüfenden Übertragungsteilstrecke im Paketnetz kommen alle Vorrichtungen des Paketnetzes in Frage, die mit der oben definierten Spiegelfunktionalität versehen werden können. Das sind z.B. Media Gateways, Access Gateways, NAT(network access translation) Router etc. In der Regel umfasst das Paketnetz Teilnetze bzw. Paketnetzdomainen, die z.B. unterschiedlichen Netzbetreibern gehören oder unterschiedliche Netzadressierung mit nur lokaler Eindeutigkeit verwenden. Zwischen derartigen Teilnetzen kommen dann Vorrichtungen bzw. Teilnetzübergangseinrichtungen zum Einsatz, die eine erfindungsgemäße Spiegelfunktionalität unterstützen können. (Eine Spiegelung kann dabei z.B. durch Adressänderungen im Paketheader vorgenommen werden.) Der Begriff Gateway ist dahingehend zu verstehen, dass alle Typen von Vorrichtungen im Paketnetz oder am Rande des Paketnetzes, die mit einer erfindungsgemäßen Spiegelfunktionalität ausgestattet werden können, umfasst sind. Die Spiegelfunktionalität im Sinne einer Weiterübermittlung bzw. Weiterleitung der Nutzdaten auf einer weiteren Verbindung im Paketnetz kann z.B. durch eine feste Verbindung zweier Ports eines Gateways oder einer Baugruppe eines Gateways realisiert werden.

Allgemein wird die Überprüfung dadurch realisiert, dass von einem Ressourcen-Server mit Direktorfunktionalität eine Prüfinformation gesendet wird, die an wenigstens einem Gateway reflektiert bzw. gespiegelt und schließlich zu einem Ressourcen-Server mit Responderfunktionalität übertragen wird. In vielen Fällen wird es günstig sein, wenn die beiden Ressourcen-Server mit Direktor- bzw. Responderfunktionalität zusammenfallen, d.h. der Übertragungsweg der Prüfinformation geschlossen ist. Der Übertragungsweg der Prüfinformation kann so gewählt werden, dass eine zu überprüfende Teilstrecke eingeschlossen ist. Durch Senden von Prüfinformationen über andere Wege und Kombination (z.B. Subtraktion) der Resultate kann die zu überprüfende Teilstrecke isoliert und die Übertragungsqualität auf dieser Teilstrecke bestimmt werden. Gesteuert wird die Übertragung der Prüfinformation durch wenigstens eine Steuervorrichtung. Bei Senden der Prüfinformation über Übertragungsstrecken mit Gateways bzw. Ressourcen-Servern, die nicht alle von der gleichen Steuervorrichtung steuerbar sind, wird in der Regel mehr als eine Steuervorrichtung involviert sein. Im Folgenden werden als eine Ausgestaltung drei Verfahren dargestellt, die z.B. kombiniert werden können, um die Übertragungsqualität zwischen zwei Gateways zu testen.

Zur Überprüfung von Qualitätsmerkmalen bei der Übertragung von Daten zwischen dem Ressourcenserver und einem Gateway kommt ein erstes erfindungsgemäßes Verfahren zum Einsatz. Bei dem ersten Verfahren wird durch das paketbasierte Vermittlungssystem eine Verbindung zwischen dem Ressourcenserver und einem Gateway veranlasst bzw. aufgebaut. Dabei handelt es sich um eine bidirektionale Verbindung. Von dem Ressourcenserver wird ein Prüfsignal bzw. eine Prüfsequenz zu dem Gateway übertragen. Im Gateway wird das Prüfsignal bzw. die Prüfsequenz gespiegelt und aus der selben Verbindung zum Ressourcenserver zurückübertragen. Spiegelung bedeutet hier die Rückübertragung auf derselben Verbindung an den Ressourcenserver. Das kann beispielsweise durch eine entsprechende Änderung der Paketheader von zu der Prüfsequenz bzw. der Prüfsignal gehörigen Datenpaketen realisiert werden. Vorzugsweise erfolgt die Spiegelung unter Durchlaufen aller Gateway-Funktionen (z. B. Kodierfunktionen), also nahe der vom Direktor entfernten Netzseite, um qualitätsverschlechternde Eigenschaften des Gateways selbst mitzuerfassen. Alternativ zu einer bidirektionalen Verbindung können auch zwei unidirektionale Verbindungen zwischen dem Ressourcenserver und dem Gateway verwendet werden. In diesem Falle entspricht die Spiegelfunktionalität der Fähigkeit, Datenpakete einer bestimmten Verbindung über eine andere Paketnetz-Verbindung weiter zu senden. Die vom Ressourcenserver empfangenen Prüfsignale bzw. Prüfsequenzen können mit dem ursprünglichen Signal verglichen und so auf Verzerrungen bzw. Übertragungsfehler und Signalabschwächung überprüft werden. Die Abarbeitung des Prüfauftrags und die Logik zur Lokalisierung eventueller Fehler, wie auch die Erstellung eines eventuellen Prüfberichts, ist vorzugsweise von dem Ressourcenserver bereitzustellen. Alternativ kann zum Beispiel die Fehleranalyse auch in der paketbasierten Vermittlungsstelle vorgenommen werden, was aber zu zusätzlicher Komplexität führt. Es ist daher sinnvoll, eine Schnittstelle des Ressourcenservers für den Zugriff zu Prüfplätzen der Verbindungsleitungsprüfung vorzusehen.

Die Überprüfung von Übertragungsstrecken zwischen verschiedenen Gateways kann mit Hilfe eines weiteren Verfahrens, im folgenden zweites Verfahren genannt, erfolgen. Bei diesem Verfahren wird ein Verbindungsaufbau zwischen dem Ressourcenserver und einem ersten Gateway, eine Verbindung zwischen dem ersten Gateway und einem zweiten Gateway sowie eine Verbindung zwischen dem zweiten Gateway und dem Ressourcenserver durch die Vermittlungsstelle veranlasst. Ein Testsignal bzw. eine Prüfsequenz wird dann von dem Ressourcenserver zu dem ersten Gateway, dann von dem ersten Gateway zu dem zweiten Gateway und schließlich von dem zweiten Gateway zurück zu dem Ressourcenserver übertragen. Eine zusätzliche Übertragung eines Prüfsignals bzw. einer Prüfsequenz in der Gegenrichtung über die selben Verbindungen oder zusätzlich aufgebauten Verbindungen kann durchgeführt werden, um die Übertragungsqualität in beiden Richtungen zu testen. Im Falle einer nichtbefriedigenden Übertragungsqualität bzw. eines Fehlers kann die die Qualitätsminderung bzw. den Übertragungsfehler verursachende Teilstrecke identifiziert werden, indem man das erste Verfahren mit dem zweiten kombiniert. Mit Hilfe des ersten Verfahrens lässt sich die Übertragungsqualität auf den Übertragungsstrecken zwischen dem Ressourcenserver und dem ersten und dem zweiten Gateway überprüfen, so dass sich im Falle zufrieden stellender Qualität auf den Teilstrecken zwischen dem Ressourcenserver und den Gateways Rückschlüsse über Qualitätsminderungen bzw. Fehler auf der Teilstrecke zwischen den beiden Gateways ziehen lassen.

Entsprechend einem dritten Verfahren werden Verbindungen zwischen dem Ressourcenserver und einem ersten Gateway sowie dem ersten Gateway und einem zweitem Gateway von der paketbasierten Vermittlungsstelle veranlasst. Eine Prüfnachricht oder eine Prüfsequenz wird. dann von dem Ressourcenserver zuerst zu dem ersten Gateway und dann von dem ersten Gateway zu dem zweiten Gateway übertragen. Im zweiten Gateway wird das Prüfsignal bzw. die Prüfsequenz gespiegelt und zu dem ersten Gateway zurückübertragen. Von dem ersten Gateway wird schließlich das Prüfsignal bzw. die Prüfsequenz wieder zu dem Ressourcenserver übertragen. Die Übertragungen können auf der selben bidirektionalen oder verschiedenen unidirektionalen Verbindungen erfolgen. In Verbindung mit dem ersten Verfahren lässt sich bei einem Fehler bzw. bei Qualitätsminderung überprüfen, welchen Beitrag die einzelnen Teilstrecken zwischen Ressourcenserver und erstem Gateway bzw. erstem Gateway und zweitem Gateway zu der Qualitätsminderung bzw. dem Fehler beitragen.

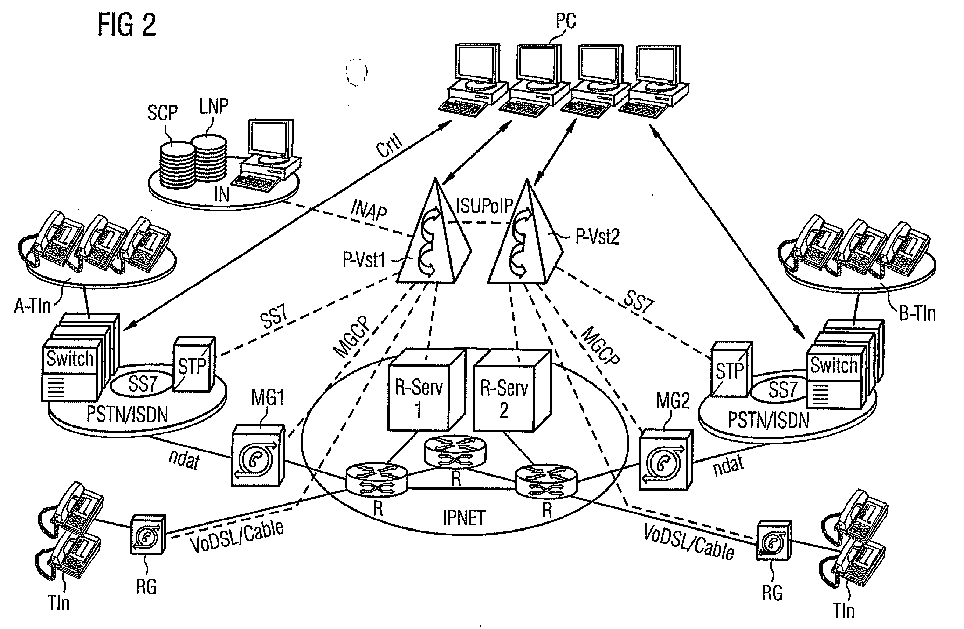

Bei dem zweiten und dritten Verfahren können das erste und das zweite Gateway von unterschiedlichen paketbasierten Vermittlungsstellen gesteuert sein. Ein derartiges Szenario ist im Rahmen der im Ausführungsbeispiel besprochenen Figur 2 dargestellt. In diesem Fall können beide paketbasierten Vermittlungsstellen bei dem Verbindungsaufbau zwischen dem ersten und zweiten Gateway sowie bei dem Aufbau zwischen dem Ressourcen-Server und einem der beiden Gateways involviert sein. Zur Kommunikation zwischen den paketbasierten Vermittlungsstellen wird dabei beispielsweise das ISUP (ISDN User Part) Protokoll verwenden. Es ist in diesem Fall auch möglich, dass Direktorfunktion und Responderfunktion in zwei verschiedenen Ressourcen-Servern realisiert sind, die von unterschiedlichen paketorientierten Vermittlungsstellen gesteuert werden. Bei dieser Konstellation kann entweder eine direkte Übermittlung des Typs der Prüfinformation zwischen den beiden Ressoucen-Servern stattfinden (z. B. über die Rufnummer), oder die Prüfinformation wird über Prüfplätze mittels Bedienereingaben dem zweiten Ressourcen-Server mitgeteilt.

Die Erfindung hat den Vorteil, dass die üblicherweise aufwendige und teueren Testfunktionen zur Überprüfung der Übertragungsqualität, insbesondere zur Bewertung der Qualität von Sprachübertragung, auf zentralisierten Ressourcenservern bereitgestellt wird. Solche Ressourcenserver sind üblicherweise in paketbasierten Netzen vorhanden, um Funktionalitäten und Dienstmerkmale, z. B. Interactive-Voice-Response (IVR) Funktionen oder Konferenzfunktionen, bereitzustellen. Es können, aber müssen daher nicht, zusätzliche Server für die Überprüfung von der Übertragungsqualität bereitgestellt werden. Wirtschaftlicher ist es, die entsprechenden Prüffunktionen auf einem in dem Netz vorhandenen Ressourcen-Server vorzusehen. Übertragungsstrecken zwischen Gateways, die an das paketbasierte Netz angeschlossen sind, wie zum Beispiel Media-Gateways, Residential-Gateways, Access-Gateways und NAT Router können überprüft werden, ohne dass aufwendige Funktionen auf den Gateways zur Verfügung gestellt werden müssten. Es ist ausreichend, auf den überprüften Gateways für die Spiegelfunktionalität zu sorgen. Weiter kann die Spiegelfunktionalität auf einen Teil der Ports, in der Regel virtuelle Ports, der Gateways beschränkt werden. Die Spiegelfunktionalität kann auch durch TDM-seitige Schleifen realisiert werden, wenn sie nicht direkt im Gateway vorhanden ist. Die Bewertung der Sprachqualität der Verbindung zwischen zwei Gateways, zum Bespiel Media-Gateways, Residential-Gateways und Access-Gateways, wird durch den Ausschluss schlechter Sprachqualität auf den Verbindungsabschnitten zwischen dem Gateway und dem zentralisierten Ressourcenserver bewerkstelligt, das heißt, einzelne Teilstärken lassen sich hinsichtlich der Qualität analysieren, indem die verschiedenen erfindungsgemäßen Verfahren kombiniert werden.

Die erfindungsgemäße Vorgehensweise der Platzierung von Direktor- und Responderfunktionalität in Ressourcen-Server und das Rundsenden von Prüfinformationen über Gateways, an denen die Prüfinformation reflektiert oder auf ein anderes Ziel im Paketnetz umgelenkt wird, ist nicht auf übertragungspfade . bzw. Rundstrecken mit zwei Gateways beschränkt. Im Prinzip kann eine Prüfinformation von beliebig vielen Gateways gespiegelt bzw. weitergeleitet werden, bevor sie bei dem Responder ankommt. Für Aussagen über einzelne Streckenabschnitte kann das Ergebnis einer Übertragung über mehrere Gateways mit Ergebnissen von Tests, bei denen ein oder zwei Gateways beteiligt sind, kombiniert werden.

Im folgenden wird die Erfindung im Rahmen eines Ausführungsbeispieles anhand von Figuren näher erläutert.

Es zeigen
Fig. 1 ein Szenario für Sprachübertragung über ein paketbasiertes Netz,
Fig. 2 ein Szenario für Sprachübertragung über ein paketorientiertes Netz, bei der zwei paketorientierte Vermittlungsstellen zum Einsatz kommen,
Fig. 3 schematische Darstellung des ersten erfindungsgemäßen Verfahrens,
Fig. 4 schematische Darstellung des zweiten erfindungsgemäßen Verfahrens,
Fig. 5 schematische Darstellung des dritten erfindungsgemäßen Verfahrens.

In den Figuren bezeichnen gleiche Bezugszeichen gleiche Elemente.

Figur 1 und 2 zeigen typische Netzszenarien, die bei der Übertragung von Daten, insbesondere Sprachdaten, vorkommen. Figur 2 unterscheidet sich von der in der Beschreibungseinleitung behandelten Figur 1 dadurch, dass zwei paketbasierte Vermittlungsstellen P-Vst1 und P-Vst2 bei der Übertragung von Sprachdaten zwischen dem A-Teilnehmer A-Tln und dem B-Teilnehmer B-Tln in dem Bereich des Paketnetzes IPNET zum Einsatz kommen. Beiden Vermittlungssystemen P-Vst1 und P-Vst2 sind Ressourcenserver R-Serv1 bzw. R-Serv2 zugeordnet, die im Paketnetz IPNET positioniert sind. Signalisierungsinformationen werden zwischen den beiden Vermittlungsstellen P-Vst1 und P-Vst2 mit Hilfe des ISUP (ISDN user part) Protokolls ausgetauscht, welches zum Beispiel überdas IP-Protokoll übermittelt werden kann (Bezugszeichen ISUPoIP). Im Zuständigkeitsbereich der Vermittlungsstellen P-Vst1 und P-Vst2 gibt es jeweils einen Ressourcenserver R-Serv1 bzw. R-Serv2. Dabei handelt es sich beispielsweise um IVR-Server. Bei paketorientierten Vermittlungssystemen wird häufig für jedes Vermittlungssystem mindestens ein IVR-Server bereitgestellt, um IVR-Funktionalitäten im Bedarfsfall durch das paketbasierte Vermittlungssystem auf eine Verbindung aufzuschalten. Die Steuerschnittstellen zwischen Vermittlungssystem und IVR-Server bzw. Ressourcenserver sind meist IP-basiert und benutzen das Media-Gateway-Control-Protocol MGCP. Ein derartiger Ressourcenserver kann mit der erfindungsgemäßen Prüffunktionalität zusätzlich zu der anderen Funktionalität ausgestattet werden, so dass keine zusätzliche Plattform für diesen Zweck vorgesehen werden muss. Beispielsweise kann erfindungsgemäß die Übertragungsstrecke zwischen den beiden Media Gateways MG1 und MG2 überprüft werden. Dazu erfolgt zunächst eine Überprüfung der Übertragungsstrecken zwischen dem Ressourcen-Server R-Serv1 und dem Media Gateway MG1 sowie zwischen dem Ressourcen-Server R-Serv2 und dem Media Gateway MG2. Als nächster Schritt wird eine Prüfinformation von dem ersten Ressourcen-Server R-Serv1 zu dem ersten Media Gateway MG1, von dem ersten Media Gateway MG1 zu dem zweiten Media Gateway MG2 und schließlich von dem zweiten Media Gateway MG2 zu dem zweiten Ressourcen-Server R-Serv2 übertragen. Alternativ kann auch die Prüfinformation von dem zweiten Media Gateway wieder zu dem ersten Ressourcen-Server R-Serv1 übertragen werden. Bei der Verbindungssteuerung bei der Übertragung zwischen den beiden Media Gateways sind beide paketorientierten Vermittlungsstellen P-Vst1 und P-Vst2 involviert. Die Übertragungsqualität über die zu prüfende Übertragungsstrecke wird durch Kombination der Ergebnisse der drei Testübertragungen von Prüfinformationen ermittelt.

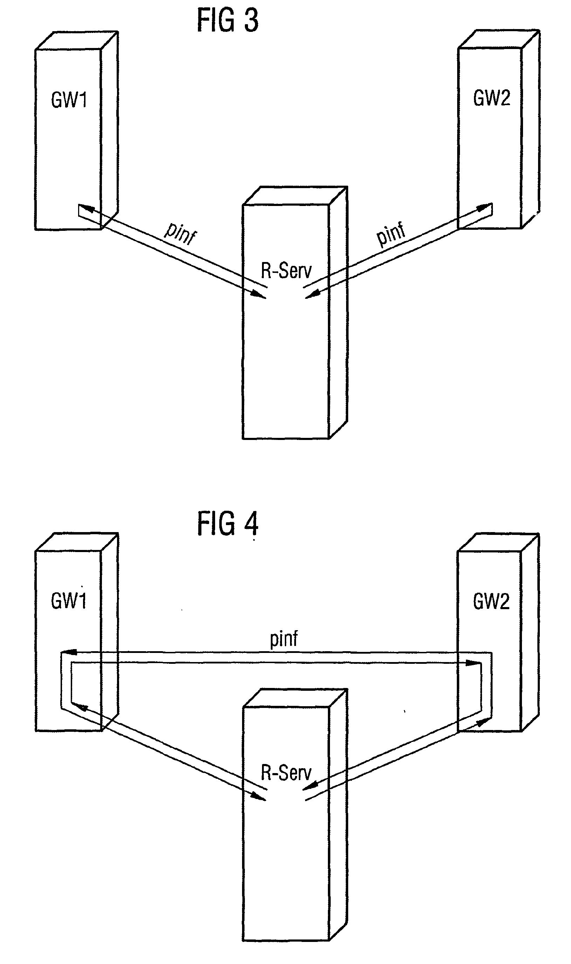

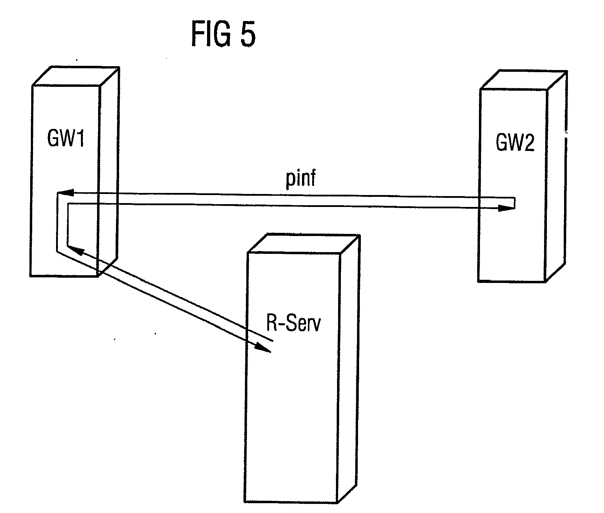

Figuren 3, 4 und 5 zeigen die erfindungsgemäßen Verfahren eins, zwei und drei. Es sind jeweils ein Ressourcenserver R-Serv mit Direktor- und Responderfunktionalität sowie zwei Gateways GW1 und GW2 mit Spiegelungsfunktionalität dargestellt. Die Übertragungswege des Prüfsignals bzw. der Prüfsequenz pinf (pinf: Prüfinformation) ist durch durchgezogenen Linien mit Pfeilen gekennzeichnet. Entsprechend dem ersten Verfahren wird die Prüfungsinformation von dem Ressourcenserver R-Serv zu dem ersten WG1 bzw. zu dem zweiten Gateway GW2 übertragen, und gespiegelt und wieder zum Ressourcenserver R-Serv zurück übertragen. Bei dem zweiten Verfahren (Figur 4) wird die Prüfungsinformation pinf zunächst von dem Ressourcenserver R-Serv zum ersten Gateway GW1, von dort zum zweiten Gateway GW2 und schließlich wieder zurück zum Ressourcenserver R-Serv übertragen. In der Gegenrichtung kann auch eine Prüfungsinformation pinf übertragen werden, um bidirektionale Übertragungswege zu überprüfen. Beim dritten Verfahren schließlich (Figur 5) wird die Prüfungsinformation pinf zunächst vom Ressourcenserver R-Serv zum ersten Gateway GW1 übertragen, dort an das zweite Gateway GW2 weitergeleitet, im zweiten Gateway GW2 gespiegelt und schließlich über das erste Gateway GW1 zurück zum Ressourcenserver R-Serv übertragen. Durch Kombination der Verfahren lässt sich die Übertragungsqualität auf allen drei Teilstrecken, dass heißt zwischen dem Ressourcenserver R-Serv und dem ersten Gateway GW1, dem ersten Gateway GW1 und dem zweiten Gateway GW2 und dem zweiten Gateway GW2 und dem Ressourcenserver R-Serv überprüfen.

Die erfindungsgemäßen Verfahren können zur Überprüfung der Qualität von Sprachübertragung gemäß des Standards ITU-T P.861 (Objective quality measurement of telephone-band (300-3400 Hz) speech codecs) oder/und ITU-T P.862 (Perceptual evaluation of speech quality (PESQ), an objective method for end-to-end speech quality assessment of narrowband telephone networks and speech codecs) implementiert sein. Für Tests der Übertragungsqualität sind für den Ressourcenserver R-Serv und die Gateways GW1 und GW2 virtuelle Ports definiert. Diese virtuellen Ports bestimmen die Adressinformationen der übertragenen Pakete. Das vermittlungstechnische Programm der Testports ist in der Lage, die gewünschten Spiegel- bzw. Umleitungsfunktionen der Gateways GW1 und GW2 zu steuern oder befindet sich in Kenntnis davon, dass eine auf einer externen Schleife beruhende gleichwertige Funktionalität in Form von einem kurzgeschlossenen Port bzw. in Form von zwei einander zugeordneten virtuellen Ports vorhanden ist. Diese Informationen werden ggf. beim administrativen Einrichten des Testports bereitgestellt.

Extern werden von Verbindungsleitungsprüfplätzen Testaufträge an ein paketorientiertes Vermittlungssystem ausgegeben. Entsprechend den Testaufträgen schaltet das paketorientierte Vermittlungssystem die Verbindungen für Überprüfungen mittels der in Fig.3 bis Fig.5 dargestellten Verfahren sukzessive durch. Das Ende eines Tests kann jeweils durch das Auslösen der Testverbindungen durch den Ressourcen-Server R-Serv erfolgen, was das automatische Auslösen zugehöriger Folgeverbindungen an für das Verfahren verwendeten Ports der Gateways GW1 und GW2 nach sich ziehen kann. Ebenso kann auf die Auslösung der Verbindung und den Abschluß des Tests die Information des Verbindungsleitungsprüfplatzes zur Initiierung eines eventuell nächsten Testschritts erfolgen.

Der Prüfbericht wird von dem Ressourcen-Server R-Serv geschrieben, wobei der Ressourcen-Server R-Serv aus der Kenntnis der Prüfauftragsfolge eine Fehlerlokalisierungsaussage und Dringlichkeitsaussage für Gegenmaßnahmen zu erzeugen im Stande ist. Über eine Web-basierte Schnittstelle hat der Verbindungsleitungsprüfplatz Zugriff zu diesen Ausgaben. Über diese Schnittstelle lassen sich auch die jeweils auszuführenden Testschritte im Detail festlegen. Beim Start des Tests kann das jeweils gewünschte Testscript dann via Parameter über den Ressourcen-Server R-Serv steuernde Media Gateway Control Protocol ausgewählt werden.

## Patentansprüche

1. Verfahren zur Überprüfung der Übertragungsqualität zwischen einem ersten Gateway (GW1) und einem zweiten Gateway (GW2) in einem Paketnetz (IPNET), das mit wenigstens einem paketbasierten Vermittlungssystem (P-Vst) in Wirkverbindung steht, bei dem
- im Zuge eines ersten Verfahrens
-- durch das paketbasierte Vermittlungssystem (P-Vst) ein Verbindungsaufbau zwischen einem Ressourcen-Server (R-Serv) und dem ersten Gateway (GW1) veranlasst wird,
-- von dem Ressourcen-Server (R-Serv) eine Prüfinformation (pinf) über die Verbindung zu dem ersten Gateway (GW1) übertragen wird,
-- die Prüfinformation (pinf) in dem ersten Gateway (GW1) gespiegelt wird,
-- die gespiegelte Prüfinformation (pinf) zu dem Ressourcen-Server (R-Serv) zurück übertragen wird, und
-- die gespiegelte Prüfinformation (pinf) hinsichtlich die Übertragungsqualität betreffender Kriterien ausgewertet wird,
- ein dem ersten Verfahren entsprechendes zweites Verfahren für das zweites Gateway (GW2) und den Ressourcen-Server (R-Serv) durchgeführt wird,
- im Zuge eines dritten Verfahrens
-- eine Prüfinformation (pinf) von einer in dem Ressourcen-Server (R-Serv) angeordneten Direktorfunktion über das erste Gateway (GW1) und das zweite Gateway (GW2) zu einer in dem Ressourcen-Server (R-Serv) angeordneten Responderfunktion übertragen wird, indem
--- durch das paketbasierte Vermittlungssystem (P-Vst) ein Verbindungsaufbau zwischen dem Ressourcen-Server (R-Serv) und dem ersten Gateway (GW1) veranlasst wird,
--- durch das paketbasiertes Vermittlungssystem (P-Vst) ein Verbindungsaufbau zwischen dem ersten Gateway (GW1) und dem zweiten Gateway (GW2) veranlasst wird,
--- durch das paketbasiertes Vermittlungssystem (P-Vst) ein Verbindungsaufbau zwischen dem zweiten Gateway (GW2) und dem Ressourcen-Server (R-Serv) veranlasst wird, und
--- von dem Ressourcen-Server (R-Serv) eine Prüfinformation (pinf) über die aufgebauten Verbindungen zunächst zu dem ersten Gateway (GW1), von dem ersten Gateway (GW1) zu dem zweiten Gateway (GW2) und von dem zweiten Gateway (GW2) zu dem Ressourcen-Server (R-Serv) übertragen wird, und
-- die empfangene Prüfinformation (pinf) hinsichtlich die Übertragungsqualität betreffender Kriterien ausgewertet wird, und
- die Ergebnisse der drei Verfahren zur Überprüfung der Übertagungsqualität auf dem Übertragungsabschnitt zwischen dem ersten Gateway (GW1) und dem zweiten Gateway (GW2) kombiniert werden.

2. Verfahren zur Überprüfung der Übertragungsqualität zwischen einem ersten Gateway (GW1) und einem zweiten Gateway (GW2) in einem Paketnetz (IPNET), das mit wenigstens einem paketbasierten Vermittlungssystem (P-Vst) in Wirkverbindung steht, bei dem
- im Zuge eines ersten Verfahrens
-- durch das paketbasierte Vermittlungssystem (P-Vst) ein Verbindungsaufbau zwischen einem Ressourcen-Server (R-Serv) und dem ersten Gateway (GW1) veranlasst wird,
-- von dem Ressourcen-Server (R-Serv) eine Prüfinformation (pinf) über die Verbindung zu dem ersten Gateway (GW1) übertragen wird,
-- die Prüfinformation (pinf) in dem ersten Gateway (GW1) gespiegelt wird,
-- die gespiegelte Prüfinformation (pinf) zu dem Ressourcen-Server (R-Serv) zurück übertragen wird, und
-- die gespiegelte Prüfinformation (pinf) hinsichtlich die Übertragungsqualität betreffender Kriterien ausgewertet wird,
- im Zuge eines zweiten Verfahrens
-- eine Prüfinformation (pinf) von einer in einem Ressourcen-Server (R-Serv) angeordneten Direktorfunktion über das erste Gateway (GW1) und das zweite Gateway (GW2) zu einer in dem Ressourcen-Server (R-Serv) angeordneten Responderfunktion übertragen wird, indem
--- durch das paketbasiertes Vermittlungssystem (P-Vst) ein Verbindungsaufbau zwischen dem Ressourcen-Server (R-Serv) und dem ersten Gateway (GW1) veranlasst wird,
--- durch das paketbasiertes Vermittlungssystem (P-Vst) ein Verbindungsaufbau zwischen dem ersten Gateway (GW1) und dem zweiten Gateway (GW2) veranlasst wird,
--- von dem Ressourcen-Server (R-Serv) eine Prüfinformation (pinf) über die aufgebauten Verbindungen zunächst zu dem ersten Gateway (GW1) und von dem ersten Gateway (GW1) zu dem zweiten Gateway (GW2) übertragen wird,
--- die Prüfinformation (pinf) im zweiten Gateway (GW2) gespiegelt wird, und
--- die gespiegelte Prüfinformation (pinf) über die aufgebauten Verbindungen zunächst von dem zweiten Gateway (GW2) zu dem ersten Gateway (GW1) und dann von dem Gateway (GW2) zu dem Ressourcen-Server (R-Serv) übertragen wird, und
-- die empfangene Prüfinformation (pinf) hinsichtlich die Übertragungsqualität betreffender Kriterien ausgewertet wird, und
- die Ergebnisse der beiden Verfahren zur Überprüfung der Übertragungsqualität auf dem Übertragungsabschnitt zwischen dem ersten Gateway (GW1) und dem zweiten Gateway (GW2) kombiniert werden.

3. Verfahren nach Anspruch 1 oder 2,
**dadurch gekennzeichnet,**
**daß** Direktorfunktion und/oder Responderfunktion auf im Ressourcen-Server (R-Serv) angeordneten Direktor- bzw. Respondermodulen verfügbar sind.

4. Verfahren nach einem der vorhergehenden Ansprüche,
**dadurch gekennzeichnet,**
- **dass** die Prüfinformation (pinf) in dem Ressourcen-Server (R-Serv) oder in einem paketbasierten Vermittlungssystem (P-Vst) ausgewertet wird.

5. Verfahren nach einem der vorhergehenden Ansprüche,
**dadurch gekennzeichnet,**
- **dass** ein Prüfbericht erstellt wird.

6. Verfahren nach einem der vorhergehenden Ansprüche,
**dadurch gekennzeichnet,**
- **dass** eine bidirektionale Verbindung zwischen dem Ressourcen-Server (R-Serv) und einem der Gateways (GW1, GW2) aufgebaut wird.

7. Verfahren nach einem der Ansprüche 1 bis 6,
**dadurch gekennzeichnet,**
**daß** die Bewertung der Sprachqualität gemäß den ITU-T Standards P.861 oder P.862 erfolgt.

8. Ressourcen-Server in einem Paketnetz (IPNET), der durch eine paketbasierte Vermittlungsstelle (P-Vst) steuerbar ist, mit einem Direktor- und einem Respondermodul zur Durchführung von Übertragungsqualitätsüberprüfungen nach einem der Verfahren 1 bis 7.

9. Ressourcen-Server nach Anspruch 8,
mit Schnittstellen des Ressourcen-Servers (R-Serv) zu Prüfplätzen.

10. Ressourcen-Server nach Anspruch 8 oder 9,
mit Mitteln zur Auswertung von Ergebnissen aus Übertragungsqualitätsüberprüfungen nach einem der Verfahren 1 bis 7.

11. Ressourcen-Server nach einem der Ansprüche 8 bis 10,
**dadurch gekennzeichnet,**
**daß** die Bewertung der Sprachqualität durch den Ressourcen-Server gemäß den ITU-T Standards P.861 oder P.862 erfolgt.

12. System in einem Paketnetz (IPNET) zur Durchführung eines der Verfahren 1 bis 7,
- mit wenigstens einer paketbasierten Vermittlungsstelle (P-Vst),
- mit wenigstens einem Ressourcen-Server (R-Serv) nach einem der Ansprüche 8 bis 11, und
- mit wenigstens einem Gateway mit einer Spiegelfunktionalität.

13. System nach Anspruch 12,
**dadurch gekennzeichnet,**
**dass** das Gateway als Media Gateway, als Access Gateway oder als Residential Gateway ausgestaltet ist.

14. System nach Anspruch 12 oder 13,
**dadurch gekennzeichnet,**
- **dass** die Spiegelfunktionalität mit Hilfe von ausschließlich für Prüfzwecke verwendeten, separat adressierbaren virtuellen Ports realisiert ist.

15. System nach einem der Ansprüche 12 bis 14,
bei dem die Spiegelfunktionalität mit Hilfe einer TDM (time division multiplexing) Schleife realisiert ist.

## Claims

1. Method for checking the transmission quality between a first gateway (GW1) and a second gateway (GW2) in a packet network (IPNET) which is effectively connected to at least one packet-based switching system (P-Vst), in which
- in the course of a first method
-- a connection is set up between a resource server (R-Serv) and the first gateway (GW1) by the packet-based switching system (P-Vst),
-- test information (pinf) is transmitted over the connection to the first gateway (GW1) from the resource server (R-Serv),
-- the test information (pinf) is looped back in the first gateway (GW1),
-- the looped-back test information (pinf) is transmitted back to the resource server, and
-- the looped-back test information (pinf) is evaluated with regard to criteria relating to the transmission criteria.
- a second method corresponding to the first method is executed for the second gateway (GW2) and the resource server (RServ),
- in the course of a third method
-- test information (pinf) is transmitted from a director function arranged in the resource server (R-Serv) via the first gateway (GW1) and the second gateway (GW2) to a responder function arranged in the resource server (R-Serv), in that
--- a connection is set up between the resource server (R-Serv) and the first gateway (GW1) by the packet-based switching system (P-Vst),
--- a connection is set up between the first gateway (GW1) and the second gateway (GW2) by a packet-based switching system (P-Vst),
--- a connection is set up between the second gateway (GW2) and the resource server (R-Serv) by a packet-based switching system (P-Vst), and
--- test information (pinf) about the connections set up is initially transmitted from the resource server (R-Serv) to the first gateway (GW1), from the first gateway (GW1) to the second gateway (GW2) and from the second gateway (GW2) to the resource server (R-Serv), and
-- the test information (pinf) received is evaluated with regard to criteria relating to the transmission criteria, and
- the results of the three methods are combined for checking the transmission quality on the transmission section between the first gateway (GW1) and the second gateway (GW2).

2. Method for checking the transmission quality between a first gateway (GW1) and a second gateway (GW2) in a packet network (IPNET) which is effectively connected to at least one packet-based switching system (P-Vst), in which
- in the course of a first method
-- a connection is set up between a resource server (R-Serv) and the first gateway (GW1) by the packet-based switching system (P-Vst),
-- test information (pinf) is transmitted over the connection to the first gateway (GW1) from the resource server (R-Serv),
-- the test information (pinf) is looped back in the first gateway (GW1),
-- the looped-back test information (pinf) is transmitted back to the resource server (R-Serv), and
- the looped-back test information (pinf) is evaluated with regard to criteria relating to the transmission criteria,
- in the course of a second method
-- test information (pinf) is transmitted from a director function arranged in a resource server (R-Serv) via the first gateway (GW1) and the second gateway (GW1) to a responder function arranged in the resource server (R-Serv), in that
--- a connection is set up between the resource server (R-Serv) and the first gateway (GW1) by the packet-based switching system (P-Vst),
--- a connection is set up between the first gateway (GW1) and the second gateway (GW2) by a packet-based switching system (P-Vst),
--- test information (pinf) is initially transmitted over the connections set up from the resource server (R-Serv) to the first gateway (GW1), from the first gateway (GW1) to the second gateway (GW2),
--- the test information (pinf) is looped back in the second gateway (GW2), and
--- the looped-back test information (pinf) is initially transmitted over the connections set up from the second gateway (GW2) to the first gateway (GW1) and then from the gateway (GW2) to the resource server (R-Serv), and
-- the test information (pinf) received is evaluated with regard to criteria relating to the transmission criteria, and
- the results of the two methods are combined for checking the transmission quality on the transmission section between the first gateway (GW2) and the second gateway (GW2).

3. Method in accordance with Claim 1 or 2,
**characterised in that**
direction function and/or responder function are available on director or responder modules arranged in the resource server (R-Serv).

4. Method according to one of the previous claims,
**characterised in that**
- the test information (pinf) is evaluated in the resource server (R-Serv) or in a packet-based switch (PVst).

5. Method according to one of the previous claims,
**characterised in that**
- a test report is created.

6. Method according to one of the previous claims,
**characterised in that**
- a bidirectional connection is established between the resource server (R-Serv) and one of the gateways (GW1, GW2).

7. Method in accordance with one of Claims 1 to 6,
**characterised in that**
the voice quality is evaluated in accordance with the ITU-T Standards P.861 or P.862.

8. Resource server in a packet network (IPNET) which can be controlled by a packet-based switch (P-Vst) with a director module and a responder module to execute transmission quality checks according to one of the methods 1 to 7.

9. Resource server in accordance with Claim 8,
with interfaces of the resource server (R-Serv) to test desks.

10. Resource server in accordance with Claim 8 or 9,
with means for evaluating results of transmission quality checks according to one of methods 1 to 7.

11. Resource server in accordance with one of Claims 8 to 10,
**characterised in that**
the voice quality is evaluated by the resource server in accordance with the ITU-T Standards P.861 or P.862.

12. System in a packet network (IPNET) for executing one of the methods 1 to 7,
- with at least one packet-based switch (P-Vst),
- with at least one resource server (R-Serv) in accordance with one of Claims 8 to 11, and
- with at least one gateway with a loopback functionality.

13. System in accordance with Claim 12,
**characterised in that**
the gateway is embodied as a media gateway, as an access gateway or as a residential gateway.

14. System in accordance with Claim 12 or 13,
**characterised in that**
- the loopback functionality is implemented with the aid of separately addressable virtual ports used exclusively for test purposes.

15. System in accordance with one of the Claims 12 to 14,
in which the loopback functionality is implemented with the aid of a TDM (time division multiplexer) loop.

## Revendications

1. Procédé pour le contrôle de la qualité de transmission entre une première passerelle (GW1) et une seconde passerelle (GW2) dans un réseau de paquets (IPNET), qui est en liaison active avec au moins un système de commutation (P-Vst) à base de paquets, dans lequel
- dans le cadre d'un premier procédé
-- un établissement de liaison entre un serveur de ressources (R-Serv) et la première passerelle (GW1) est demandé par le système de commutation (P-Vst) à base de paquets,
-- une information d'essai (pinf) est transmise du serveur de ressources (R-Serv) par la liaison à la première passerelle (GW1),
-- l'information d'essai (pinf) est réfléchie dans la première passerelle (GW1),
-- l'information d'essai (pinf) réfléchie est retransmise au serveur de ressources (R-Serv), et
-- l'information d'essai (pinf) réfléchie est analysée en ce qui concerne la qualité de transmission de critères concernés,
- un second procédé correspondant au premier procédé est appliqué pour la seconde passerelle (GW2) et le serveur de ressources (R-Serv),
- dans le cadre d'un troisième procédé
-- une information d'essai (pinf) est transmise par une fonction de directeur disposée dans le serveur de ressources (R-Serv) par la première passerelle (GW1) et la seconde passerelle (GW2) à une fonction de répondeur disposée dans le serveur de ressources (R-Serv), du fait que
--- un établissement de liaison entre le serveur de ressources (R-serv) et la première passerelle (GW1) est demandé par le système de commutation (P-Vst) à base de paquets,
--- un établissement de liaison entre la première passerelle (GW1) et la seconde passerelle (GW2) est demandé par le système de transmission (P-Vst) à base de paquets,
--- un établissement de liaison entre la seconde passerelle (GW2) et le serveur de ressources (R-serv) est demandé par le système de commutation (P-Vst) à base de paquets, et
--- une information d'essai (pinf) est transmise du serveur de ressources (R-serv) par les liaisons établies d'abord à la première passerelle (GW1), de la première passerelle (GW1) à la seconde passerelle (GW2) et de la seconde passerelle (GW2) au serveur de ressources (R-Serv), et
-- l'information d'essai (pinf) reçue est analysée en ce qui concerne la qualité de transmission de critères concernés, et
- les résultats des trois procédés pour le contrôle de la qualité de transmission sur le tronçon de transmission entre la première passerelle (GW1) et la seconde passerelle (GW2) sont combinés.

2. Procédé pour le contrôle de la qualité de transmission entre une première passerelle (GW1) et une seconde passerelle (GW2) dans un réseau de paquets (IPNET), qui est en liaison active avec au moins un système de commutation (P-Vst) à base de paquets, dans lequel
- dans le cadre d'un premier procédé
-- un établissement de liaison entre un serveur de ressources (R-Serv) et la première passerelle (GW1) est demandé par le système de commutation (P-Vst) à base de paquets,
-- une information d'essai (pinf) est transmise du serveur de ressources (R-Serv) par la liaison à la première passerelle (GW1),
-- l'information d'essai (pinf) est réfléchie dans la première passerelle (GW1),
-- l'information d'essai (pinf) réfléchie est retransmise au serveur de ressources (R-Serv), et
-- l'information d'essai (pinf) réfléchie est analysée en ce qui concerne la qualité de transmission de critères concernés,
- dans le cadre d'un second procédé
-- une information d'essai (pinf) est transmise par une fonction de directeur disposée dans un serveur de ressources (R-Serv) au moyen de la première passerelle (GW1) et de la seconde passerelle (GW2) à une fonction de répondeur disposée dans le serveur de ressources (R-Serv), du fait que
--- un établissement de liaison entre le serveur de ressources (R-Serv) et la première passerelle (GW1) est demandé par le système de commutation (P-Vst) à base de paquets,
--- un établissement de liaison entre la première passerelle (GW1) et la seconde passerelle (GW2) est demandé par le système de commutation (P-Vst) à base de paquets,
--- une information d'essai (pinf) est transmise du serveur de ressources (R-Serv) par les liaisons établies d'abord à la première passerelle (GW1) et de la première passerelle (GW1) à la seconde passerelle (GW2),
--- l'information d'essai (pinf) est réfléchie dans la seconde passerelle (GW2), et
--- l'information d'essai (pinf) réfléchie est transmise par les liaisons établies d'abord de la seconde passerelle (GW2) à la première passerelle (GW1) et ensuite de la passerelle (GW2) au serveur de ressources (R-Serv), et
-- l'information d'essai (pinf) reçue est analysée en ce qui concerne la qualité de transmission de critères concernés, et
- les résultats des deux procédés sont combinés pour le contrôle de la qualité de transmission sur le tronçon de transmission entre la première passerelle (GW1) et la seconde passerelle (GW2).

3. Procédé selon la revendication 1 ou 2,
**caractérisé en ce que**,
la fonction de directeur et/ou la fonction de répondeur sont disponibles sur des modules de directeur resp. de répondeur disposés dans le serveur de ressources (R-Serv).

4. Procédé selon l'une quelconque des revendications précédentes,
**caractérisé en ce que**
- l'information d'essai (pinf) est analysée dans le serveur de ressources (R-serv) ou dans un système de commutation (P-Vst) à base de paquets.

5. Procédé selon l'une quelconque des revendications précédentes,
**caractérisé en ce que**
- un rapport d'essai est établi.

6. Procédé selon l'une quelconque des revendications précédentes,
**caractérisé en ce que**
- une liaison bidirectionnelle est établie entre le serveur de ressources (R-Serv) et l'une des passerelles (GW1, GW2).

7. Procédé selon l'une quelconque des revendications 1 à 6,
**caractérisé en ce que**
l'évaluation de la qualité de parole s'effectue selon les standards ITU-T P.861 ou P.862.

8. Serveur de ressources dans un paquet de données (IPNET), qui peut être commandé par un centre de commutation (P-Vst) à base de paquets, avec un module de directeur et un module de répondeur pour la réalisation de contrôles de qualité de transmission selon l'un des procédés 1 à 7.

9. Serveur de ressources selon la revendication 8,
avec des interfaces du serveur de ressources (R-Serv) avec des postes d'essai.

10. Serveur de ressources selon la revendication 8 ou 9,
avec des moyens pour l'analyse de résultats provenant de contrôles de qualité de transmission selon l'un des procédés 1 à 7.

11. Serveur de ressources selon l'une des revendications 8 à 10,
**caractérisé en ce que**
l'évaluation de la qualité de parole par le serveur de ressources s'effectue selon les standards ITU-T P.861 ou P.862.

12. Système dans un réseau de paquets (IPNET) pour la mise en oeuvre de l'un des procédés 1 à 7,
- comprenant au moins un centre de commutation (P-Vst) à base de paquets,
- avec au moins un serveur de ressources (R-Serv) selon l'une quelconque des revendications 8 à 11, et
- avec au moins une passerelle avec une fonctionnalité de miroir.

13. Système selon la revendication 12,
**caractérisé en ce que**
la passerelle est conçue comme Media Gateway, comme Access Gateway ou comme Residential Gateway.

14. Système la revendication 12 ou 13,
**caractérisé en ce que**
- la fonctionnalité de miroir est réalisée à l'aide de ports virtuels, utilisés exclusivement à des fins d'essai et adressables séparément.

15. Système selon l'une quelconque des revendications 12 à 14, dans lequel la fonctionnalité de miroir est réalisée à l'aide d'une boucle TDM (time division multiplexing).
